Europäisches Patentamt

European Patent Office

Office européen des brevets

(11) Veröffentlichungsnummer: **0 033 123**
**B1**

(12) **EUROPÄISCHE PATENTSCHRIFT**

(45) Veröffentlichungstag der Patentschrift: **07.05.86**

(21) Anmeldenummer: **81100397.9**

(22) Anmeldetag: **20.01.81**

(51) Int. Cl.⁴: **G 02 B 6/44,** H 01 B 13/00

(54) **Verfahren zur Herstellung einer Verseileinheit und Einrichtung zur Durchführung des Verfahrens.**

(30) Priorität: **24.01.80 DE 3002523**

(43) Veröffentlichungstag der Anmeldung:
**05.08.81 Patentblatt 81/31**

(45) Bekanntmachung des Hinweises auf die
Patenterteilung:
**07.05.86 Patentblatt 86/19**

(84) Benannte Vertragsstaaten:
**AT BE CH DE FR GB IT LI LU NL SE**

(56) Entgegenhaltungen:
**DE-A-2 735 476**
**FR-A-2 010 277**
**FR-A-2 309 021**
**FR-A-2 399 719**
**GB-A-2 046 471**

(73) Patentinhaber: **Siemens Aktiengesellschaft**
**Berlin und München Wittelsbacherplatz 2**
**D-8000 München 2 (DE)**

(72) Erfinder: **Oestreich, Ulrich, Dipl.-Ing.**
**Karl-Witthalm-Strasse 15**
**D-8000 München 70 (DE)**

Courier Press, Leamington Spa, England.

## Beschreibung

Die Erfindung bezieht sich auf ein Verfahren zur Herstellung einer Verseileinheit, deren Verseilelemente aus jeweils mindestens einem von einer Hülle umschlossenen Lichtwellenleiter bestehen, wobei die Verseilelemente miteinander ZS-verseilt werden und das so entstehende Bündel mit einem äußeren Mantel umspritzt wird.

Bei der Verseilung von einzelnen Elementen zu einem Bündel tritt an den Enden stets die Gefahr auf, daß dieses Bündel sich entseilt. Auf der ganzen Länge ist diese Gefahr vorhanden, wenn die einzelnen Elemente nach dem SZ-Verseilverfahren zusammengefaßt sind, weil die Umkehrstellen wie die Enden einer Verseilung betrachtet werden können.

Aus der DE—A—27 23 659 ist es bekannt, optische Nachrichtenkabel durch das Umspinnen mit einer Haltewendel vorzugsweise in unmittelbarer Nähe des Verseilpunktes in ihrem verseilzustand zu sichern. Da die Haltewendel jedoch zumindest in einem gewissen Umfang mehr oder weniger fest auf den einzelnen gepolsterten Lichtwellenleiterfasern aufsitzen muß, besteht die Gefahr, daß diese in unerwünschter Weise mechanische beansprucht werden.

Aus der DE—A2—27 35 476 ist ein Verfahren zur Herstellung von Kabeln und Leitungen mit SZ-verseilten Verseilelementen bekannt, bei dem ebenfalls besondere Maßnahmen zur Verhinderung des Aufseilens vorgesehen sind. Im einzelnen wird hierzu so vorgegangen, daß nach der SZ-Verseileinrichtung ein Hilfsabzug in Form einer Scheibe vorgesehen ist, auf den ein Extruder folgt, welcher die verseilten Elemente mit einer Kunststoffummantelung umspritzt. Da die Gefahr besteht, daß die Aufseilung bewirkenden Kräfte den noch weichen Kunststoff am Ausgang des Extruders nach außen drücken, ist unmittelbar hinter dem Mundstück des Extruders eine entsprechende rohrförmige Durchführung vorgesehen, deren Innendurchmesser auf den Außendurchmesser des extrudierten Mantels abgestimmt ist. Diese Durchführung ist wassergekühlt. Ihr folgt ein Wasserkühlbecken, so daß ein Aufseilen weitgehend verhindert ist. Bei dieser Ausführungsform wird somit der bereits aufextrudierte Mantel von außen in einem Rohr geführt, wobei die Gefahr besteht, daß das am Extruderausgang sehr weiche Mantelmaterial an der Innenwand des Rohres festklebt. Außerdem sind relativ hohe Vorschubkräfte notwendig, weil der Mantel über die ganze Rohrlänge entgegen den Reibungskräften vorwärts geschoben werden muß.

Der vorliegenden Erfindung liegt die Aufgabe zugrunde, eine einfache Herstellung von SZ-verseilten optischen Verseileinheiten zu ermöglichen. Gemäß der Erfindung, welche sich auf ein Verfahren der eingangs genannten Art bezieht, wird dies dadurch erreicht, daß das Bündel unummantelt durch ein bereits unmittelbar nach der Verseileinrichtung angeordnetes, die Aufseilung verhinderndes Führungsrohr bewegt wird, daß im Bereich des Führungsrohres ein dieses umgebender, äußerer Mantel mit Abstand zum Führungsrohr gespritzt und in Längsrichtung des Führungsrohres abgezogen und dabei in seinem Durchmesser heruntergereckt und abgekühlt wird, so daß am Ende des Führungsrohres der Innendurchmesser des Mantels so weit verringert und dieser so weit abgekült worden ist, daß der Mantel die Rolle des Führungsrohres übernehmen kann.

Im Inneren des Führungsrohres wird das verseilt Bündel an der Auffaltung gehindert, weil der Innendurchmesser des Führungsrohres nur wenig, vorzugsweise 10% bis 40% über dem Außendurchmesser des SZ-Bündels liegt. Am Ende des Führungsrohres wäre zwar grundsätzlich ein Auffalten möglich, da jedoch hier inzwischen der Mantel in seinem Durchmesser soweit heruntergereckt und außßdem ausreichend abgekühlt ist, daß er fast den Durchmesser des Führungsrohres erreicht hat, wird auch hier wieder ein Auffedern verhindert.

Die Erfindung betrifft weiterhin eine Einrichtung zur Durchführung des Verfahrens, welche dadurch gekennzeichnet ist, daß sie eine Verseileinrichtung, ein dieser nachgeordnetes Führungsrohr für das Lichtwellenleiterbündel, eine Vorrichtung zum Spritzen eines äußeren Mantels und eine Vorrichtung zum Abziehen des Mantels unter Abkühlung und Verminderung des Durchmessers desselben auf ein solches Maß, daß der Mantel die Rolle des Führungsrohres übernehmen kann, aufweist, und daß als Spritzvorrichtung ein eine Durchgangsöffnung für das Lichtwellenleiterbündel aufweisender Spritzkopf vorgesehen ist, der ausgangsseitig konzentrisch um die Durchgangsöffnung herum eine Austrittsöffnung für das Material des Mantels aufweist, und an dessen Durchgangsöffnung das Führungsrohr, zwischen Achse und Austrittsöffnung, koaxial anschließt.

Verseilscheibe und Verseilpunkt werden zweckmäßig in unmittelbare Nähe des Führungsrohres gelegt, das seinerseits thermisch partielle isoliert einen Spritzkopf axial durchdringt.

Sonstige Weiterbildungen der Erfindung sind in den Unteransprüchen wiedergegeben.

Die Erfindung wird nachfolgend anhand von Zeichnungen näher erläutert. Es zeigen

Fig. 1 eine Verseileinheit im Querschnitt

Fig. 2 den Aufbau einer Verseileinrichtung nach der Erfindung.

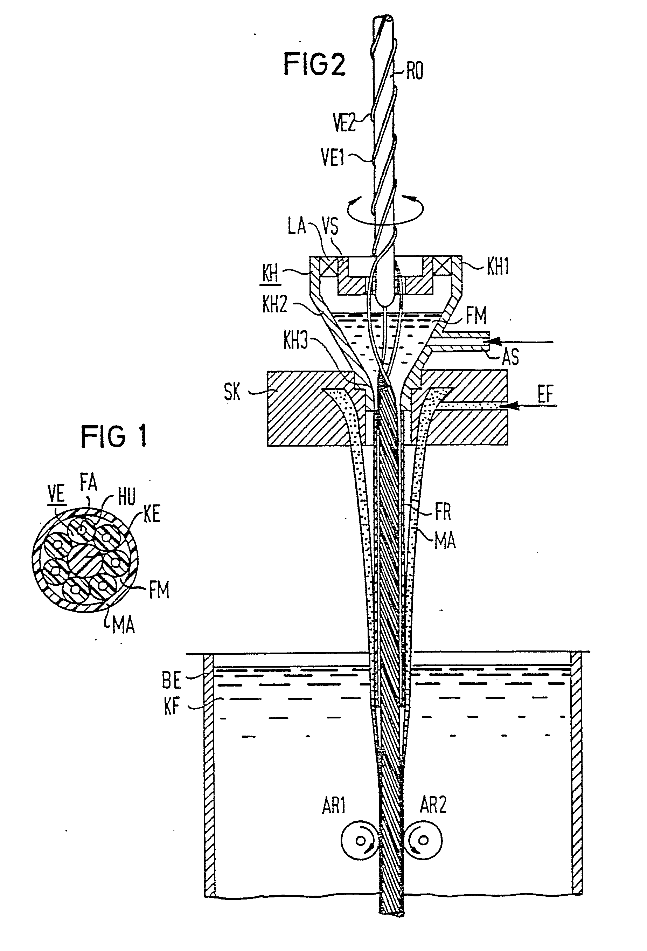

In Fig. 1 ist im Inneren einer Verseileinheit ein Kern KE vorgesehen, auf dessen Außenfläche insgesamt sieben durch eine Umhüllung HU gepolsterte Lichtwellenleiter-Fasern FA liegen. Diese als Verseilelemente VE dienenden gepolsterten Fasern sind außen durch einen Mantel MA zusammengehalten, der in der in Fig. 2 näher beschriebenen Wiese aufgespritzt wird. Der Mantel MA umgibt einerseits das Aderbündel so lose, daß die Vorteile der losen Umhüllung HU für das Bündel als Ganzes erhalten bleiben, andererseits so eng, daß das Bündel sich nicht aufseilen kann. Die Zwickel zwischen den einzelnen Verseilelementen VE sind mit einer Füllmasse FM aufgefüllt, deren Einbringung ebenfalls anhand von Fig. 2 näher erläutert wird. Die dargestellte Anordnung kann mit weiteren äußeren Umhüllungen bzw. Mänteln versehen und dann direkt als Kabel verwendet werden. Es ist jedoch auch möglich, diese Anordnung als Grundbündel zu verwenden und zusammen mit weiteren Grundbündeln in bekannter Weise zu einem Kabel zu verseilen. In beiden Fällen übernimmt der Mantel MA die Funktion der sonst ein Aufseilen verhindernden Haltewendel.

Bei der in Fig. 2 dargestellten Verseileinrichtung werden fest umhüllte Lichtwellenleiter als Verseilelemente von hier nicht dargestellten Spulen abgezogen. Zur Vereinfachung sind nur zwei Verseilelemente (Adern) VE1, VE2 dargestellt. Die SZ-Verseilung erfolgt im vorliegenden Beispiel mit Hilfe eines in der Drehrichtung wechselnden Rohres RO (Rohrspeicher), das eine entsprechend der gewünschten Schlagzahl je Richtung gewählte Länge aufweist, und in dessen Innerem (in hier nicht näher dargestellter Weise) der Kern KE nach Fig. 1 geführt sein kann. Einzelheiten dieser Verseilart und der entsprechenden Einrichtungen sind unter anderem in der DE—B—24 54 777 beschrieben. Das mit der Verseilscheibe rotierende Rohr RO wirkt dabei als der Speicher für die SZ-Verseilung. Am Ende des Rohres RO ist eine Verseilscheibe VS vorgesehen, durch deren axiale Bohrungen die einzelnen Verseilelemente VE1 bis VEn durchgeführt werden. Diese Verseilscheibe VS ist über ein Lager LA in einer gefäßartigen, z.B. trichterförmigen, koaxialen Halterung KH abgestützt. Diese Halterung KH weist ein zunächst zylindrisches Teilstück KH1 auf, in dem das Lager LA liegt. Dann folgt ein trichterförmiges Übergangsstück KH2 und am Ende ist ein weiteres zylindrisches, jedoch im Durchmesser stark verringertes Ansatzstück KH3 vorgesehen. Das Teilstück KH3, das als Verseilnippel dient, weist einen Innendurchmesser auf, der dem zu erzeugenden Bündel, (z.B. Dreierbündel, Viererbündel, Siebenerbündel) entspricht, wobei gegebenenfalls noch der Durchmesser des tragenden Kernelementes KE mit zu berücksichtigen ist.

Über einen Anschlußstutzen AS wird im Bereich des konischen Übergangsstücks KH2 vorteilhaft eine Füllmasse FM zugeführt. Es ist darauf hinzuweisen, daß die Verseilung zweckmäßig in vertikaler Richtung von oben nach unten erfolgt, d.h. die Füllmasse FM bildet einen entsprechenden Vorrat im Inneren des konischen Übergangsstücks KH2 und wird durch die Längsbewegung der einzelnen Verseilelemente VE1 bis VEn mit durch die Öffnung des Ansatzes KH3 hindurchgezogen, so daß die einzelnen Zwickel der Adern am Ausgang des Ansatzes KH3 mit Füllmasse aufgefüllt sind.

An den Ansatz KH3 ist ein Führungsrohr FR angebracht, das für eine bestimmte Strecke die verseilten Adern in ihrer durch die Verseilung vorgegebenen Konfigurationen festhält. Sowohl das Ansatzstück KH3 als auch der vordere Teil des Führungsrohres FR verlaufen im Inneren einer Öffnung in einem Spritzkopf SK. Dieser hat eine Einfüllöffnung EF, in welche die Spritzmasse eingepreßt wird. Hierfür kann bevorzugt ein reckfähiges, wandstabiles und ölbeständiges, noch molekulares Fluorpolymer (z.B. ECTFE) verwendet werden, das in geschmolzener Form in den Spritzkopf SK eingepreßt wird. Infolge der Reckkraft zieht sich das so erhaltene Kunststoffrohr nach unten aus der konisch verlaufenden, nach unten sich öffnenden Spritzdüse heraus und bildet den längs des Bündels konisch zulaufenden Mantel MA. Aufgrund der Querkontraktion während des Reckvorganges verjüngt sich der Mantel MA stark und sein Enddurchmesser muß so gewählt werden, daß der Mantel MA mit seiner Innenhaut am Ende des Führungsrohres FR den geringstmöglichen Abstand gegen dieses aufweist. Der als Außenhülle dienende Mantel MA läuft in einen Behälter BE, der mit Kühlflüssigkeit KF gefüllt ist. Die Längskraft wird auf die Außenhülle durch einen nicht gezeichneten, geschwindigkeitsgesteuerten Abzug ausgeübt.

Durch das Führungsrohr FR und ggf. auch durch die zwischen die einzelnen Zwickel eingefüllte Füllmasse FM wird das Aderbündel soweit fixiert, daß am Ende des Führungsrohres FR durch den in seinem Durchmesser stark verringerten und entweder fest oder in nur in geringem Abstand zu dem Aderbündel verlaufenden Mantel MA ein Aufseilen der einzelnen Verseilelemente entgegen der ursprünglichen Verseilrichtung verhindert ist. Dadurch kann ein SZ-verseiltes Aderbündel hergestellt werden, ohne daß die Einführung von zusätzlichen Haltewendeln zur Sicherung der Verseilung notwendig ist. Am Ende des Reckprozesses ist der Mantel MA bereits soweit verfestigt, daß sich hier bei einem Aufgehen der Verseilung die einzelnen Verseilelemente nur in einem kleinen Maße noch nach außen bewegen können. Auf jeden Fall ist verhindert, daß sich die Verseilung wieder auffaltet.

Zwei weiter unten dargestellte, an den Mantel MA leicht angepreßte Rollen AR1 und AR2 blokkieren die mit der SZ-Verseilung leicht verbundenen Torsion des fertigen, umhüllten Bündels und führen so zu einer besseren Nutzung des Inhaltes des Rohrspeichers RO.

Im Inneren des Führungsrohres FR sind im vorliegenden Beispiel in schematischer Darstellung mehr Verseilelemente gezeichnet als auf dem Rohrspeicher RO (wo zur Vereinfachung nur zwei derartige Elemente dargestellt sind). Der Innendurchmesser des Führungsrohres FR liegt etwas, vorzugsweise 10—40% über dem Außendurchmesser des SZ-verseilten Bündels.

Der Innendurchmesser des fertigen Mantels MA ist etwas größer gewählt als der Außendurchmesser des Bündels am Ende des Führungsrohres FR.

Die Kühlung des Mantels MA durch die Kühlflüssigkeit KF setzt vor dem Ende des Führungsrohres FR ein.

## Patentansprüche

1. Verfahren zur Herstellung einer Verseileinheit, deren Verseilelemente aus jeweils mindestens einem von einer Hülle umschlossenen Lichtwellenleiter bestehen, wobei diese Verseilelemente miteinander SZ-verseilt werden und das so entstehende Bündel mit einem äußeren Mantel umspritzt wird, dadurch gekennzeichnet, daß das Bündel unummantelt durch ein bereits unmittelbar nach der Verseileinrichtung (VS) angeordnetes, die Aufseilung verhinderndes Führungsrohr (FR) bewegt wird, daß im Bereich des Führungsrohres (FR) ein dieses umgebender, äußerer Mantel (MA) mit Abstand zum Führungsrohr (FR) gespritzt und in Längsrichtung des Führungsrohres (FR) abgezogen und dabei in seinem Durchmesser heruntergereckt und abgekühlt wird, so daß am Ende des Führungsrohres (FR) der Innendurchmesser des Mantels (MA) so weit verringert und dieser so weit abgekühlt worden ist, daß der Mantel (MA) die Rolle des Führungsrohres (FR) übernehmen kann.

2. Verfahren nach Anspruch 1, dadurch gekennzeichnet, daß die Verseilelemente (VE) schon vor dem Verseilnippel (KH3) in eine Füllmasse (FM) eingebettet werden und in dieser Form das Innere des Führungsrohres (FR) durchlaufen.

3. Verfahren nach Anspruch 2, dadurch gekennzeichnet, daß die Füllmasse (FM) einem Behälter (KH) zugeführt wird, dessen Ausgangsöffnung (KH3) als Verseilnippel dient.

4. Verfahren nach einem der vorhergehenden Ansprüche, dadurch gekennzeichnet, daß der Ziehvorgang des Mantels (MA) und die Verseilung in vertikaler Richtung von oben nach unten durchgeführt werden.

5. Verfahren nach einem der vorhergehenden Ansprüche, dadurch gekennzeichnet daß der Mantel (MA) durch eine Kühlflüssigkeit gekühlt wird und die Kühlung bereits vor dem Ende des Führungsrohres (FR) einsetzt.

6. Verfahren nach einem der vorhergehenden Ansprüche, dadurch gekennzeichnet, daß die Verseileinheit am Ausgang des Führungsrohres (FR) einen 10—40% kleineren Außendurchmesser hat als der Innendurchmesser des Führungsrohres (FR).

7. Verfahren nach einem der vorhergehenden Ansprüche, dadurch gekennzeichnet daß der Innendurchmesser des fertigen Mantels (MA) etwas größer gewält ist als der Außendurchmesser der Verseileinheit am Ende des Führungsrohres (FR), so daß sich die Verseilelemente noch geringfügig nach außen bewegen können.

8. Verfahren nach einem der vorhergehenden Ansprüche, dadurch gekennzeichnet daß durch zwei Reibrollen (AR1, AR2) die Torsion des fertigen Mantels (MA) samt Bündel im Bereich der kühlstrecke verhindert wird.

9. Einrichtung zur Durchführung des Verfahrens nach einem der vorhergehenden Ansprüche, dadurch gekennzeichnet, daß sie eine Verseileinrichtung (VS), ein dieser nachgeordnetes Führungsrohr (FR) für das Lichtwellenleiterbündel, eine Vorrichtung zum Spritzen eines äußeren Mantels (MA) und eine Vorrichtung zum Abziehen des Mantels unter Abkühlung und Verminderung des Durchmessers desselben auf ein solches Maß, daß der Mantel die Rolle des Führungsrohres übernehmen kann, aufweist, und daß als Spritzvorrichtung ein eine Durchgangsöffnung für das Lichtwellenleiterbündel aufweisender Spritzkopf (SK) vorgesehen ist, der ausgangsseitig konzentrisch um die Durchgangsöffnung herum eine Austrittsöffnung für das Material des Mantels aufweist, und an dessen Durchgangsöffnung das Führungsrohr (FR), zwischen Achse und Austrittsöffnung, koaxial anschließt.

10. Einrichtung nach Anspruch 9, dadurch gekennzeichnet, daß als Verseileinrichtung ein in der Drehrichtung umkehrbarer Rohrspeicher (RO) dient, der endseitig mit einer Verseilscheibe (VS) versehen ist, die außen über ein Lager (LA) gehalten ist.

11. Einrichtung nach einem der Ansprüche 9 oder 10, dadurch gekennzeichnet, daß ein trichterförmiger Behälter (KH) für die Aufnahme der Füllmasse (FM) vorgesehen ist, der ausgangsseitig ein als Verseilnippel dienendes Ansatzstück (KH3) aufweist.

12. Einrichtung nach Anspruch 11, dadurch gekennzeichnet, daß an dem Ansatzstück (KH3) das Führungsrohr (FR) befestigt ist.

13. Einrichtung nach einem der Ansprüche 11 oder 12, dadurch gekennzeichnet, daß das Ansatzstück (KH3) in der Durchgangsöffnung des Spritzkopfes (SK) gehalten ist.

## Revendications

1. Procédé pour fabriquer une unité de câblage, dont les éléments de câblage sont constitués par respectivement au moins un·guide de lumière enveloppé par une gaine, ces éléments de câblage étant câblés entre eux selon le câblage SZ et le faisceau ainsi obtenu étant muni, par extrusion, d'une enveloppe extérieure, caractérisé par le fait qu'on déplace le faisceau non guipé à travers un tube de guidage (FR) qui est disposé déjà directement en aval du dispositif de câblage (VS) et qui empêche un déroulement, qu'on forme par extrusion, dans la zone du tube de guidage (FR), une enveloppe extérieure (MA), entourant ce tube, à une distance dudit tube de guidage (FR) et qu'on tire cette enveloppe suivant la direction longitudinale du tube de guidage (FR), on lui fait subir une contraction de diamètre et on la refroidit de telle sorte qu'à l'extrémité du tube de guidage (FR), le diamètre intérieur de l'enveloppe (MA) a été suffisamment réduit et cette enveloppe a été suffisamment refroidie au point qu'elle peut jouer le rôle du tube de guidage (FR).

2. Procédé suivant la revendication 1, caractérisé par le fait que les éléments de câblage (VE) sont déjà noyés dans une masse de remplissage (FM) avant la filière de câblage et passent sous cette forme à l'intérieure du tube de guidage (FR).

3. Procédé suivant la revendication 2, caractérisé par le fait que la masse de remplissage (FM) est envoyée à un récipient (KH) dont l'ouverture de sortie (KH3) est utilisée en tant que filière de câblage.

4. Procédé suivant l'une des revendications précédentes, caractérisé par le fait que l'opération de tirage de l'enveloppe (MA) et le câblage s'effectuent de haut en bas suivant la direction verticale.

5. Procédé suivant l'une des revendications précédentes, caractérisé par le fait que l'enveloppe (MA) est refroidie à l'aide d'un liquide de refroidissement et que le refroidissement intervient déjà avant la fin du tube de guidage (FR).

6. Procédé suivant l'une des revendications précédentes, caractérisé par le fait que l'unité de câblage possède, à la sortie du tube de guidage (FR), un diamètre extérieur réduit de 10—40% par rapport au diamètre intérieur du tube de guidage (FR).

7. Procédé suivant l'une des revendications précédentes, caractérisé par le fait que le diamètre intérieur de l'enveloppe terminée (MA) est choisi légèrement supérieur au diamètre extérieur de l'unité de câblage à l'extrémité du tube de guidage (FR), de sorte que les éléments de câblage peuvent encore se déplacer légèrement vers l'extérieur.

8. Procédé suivant l'une des revendications précédentes, caractérisé par le fait que la torsion de l'enveloppe terminée (MA) ainsi que du faisceau est empêchée au moyen de deux galets de frottement (AR1, AR2), dans la région de la voie de refroidissement.

9. Dispositif pour la mise en oeuvre du procédé suivant l'une des revendications précédentes, caractérisé par le fait qu'il comporte un dispositif de câblage (VS), un tube de guidage (FR) disposé en aval de ce dispositif et prévu pour le faisceau de guides de lumière, un dispositif pour former par extrusion une enveloppe extérieure (MA) et un dispositif pour tirer l'enveloppe moyennant un refroidissement et une réduction du diamètre de cette dernière à un degré tel que l'enveloppe peut assumer le rôle du tube de guidage, et qu'il est prévu, comme dispositif d'extrusion, une tête d'extrusion (SK) possédant une ouverture de passage pour le faisceau de guides de lumière et qui comporte, dans une position concentrique autour de ouverture de passage, une ouverture de sortie pour le matériau de l'enveloppe à laquelle le tube de guidage (FR) se raccorde coaxialement, entre l'axe et l'ouverture de sortie.

10. Dispositif suivant la revendication 9, caractérisé par le fait qu'on utilise comme dispositif de câblage un accumulateur tubulaire (RO) dont le sens de rotation peut être inversé et qui est muni, au niveau de son extrémité, d'une plaque de répartition (VS) qui est maintenue extérieurement au moyen d'un palier (LA).

11. Dispositif suivant l'une des revendications 9 ou 10, caractérisé par le fait qu'il est prévu un réservoir en forme de trémie (KH) servant à recevoir la masse de remplissage (FM) et qui comporte, à sa sortie, un embout (KH3) servant de filiére de câblage.

12. Dispositif suivant la revendiaction 11, caractérisé par le fait que le tube de guidage (FR) est fixé à l'embout (KH3).

13. Dispositif suivant l'une des revendication 11 à 12, caractérisé par le fait que l'embout (KH3) est maintenu dans l'ouverture de passage de la tête d'extrusion (SK).

## Claims

1. A process for the production of a stranded unit, the stranding elements of which consist in each case of at least one light waveguide which is surrounded by a sleeve, wherein the stranding elements are SZ-stranded to one another and the bundle so produced is coated by extrusion with an outer sheath, characterised in that the unsheathed bundle is moved through a guide tube (FR) which is arranged directly after the stranding device (VS) and which prevents stranding; that in the region of the guide tube (FR) an outer sheath (MA) surrounding said tube is extruded at an interval from the guide tube (FR), drawn off in the longitudinal direction of the guide tube (FR), thereby downwardly extended in its diameter and cooled, so that at the end of the guide tube (FR), the internal diameter of the sheath (MA) is reduced to such an extent and said sheath is cooled to such an extent that the sheath (MA) can take over the role of the guide tube (FR).

2. A process as claimed in Claim 1, characterised in that the stranding elements (VE) are embedded in a filling compound (FM) before the stranding nipple (KH3) and pass through the interior of the guide tube (FR) in this form.

3. A process as claimed in Claim 2, characterised in that the filling compound (FM) is supplied to a container (KH), whose outlet opening (KH3) serves as a stranding nipple.

4. A process as claimed in one of the preceding Claims, characterised in that the drawing of the sheath (MA) and the stranding are carried out in the vertical direction from the top to the bottom.

5. A process as claimed in one of the preceding Claims, characterised in that the sheath (MA) is cooled by means of a cooling liquid and cooling already starts before the end of the guide tube (FR).

6. A process as claimed in one of the preceding Claims, characterised in that, at the outlet of the guide tube (FR), the stranded unit has an outer diameter which is smaller by 10—40% than the internal diameter of the guide tube (FR).

7. A process as claimed in one of the preceding Claims, characterised in that the internal diameter of the finished sheath (MA) is selected to be somewhat larger than the outer diameter of the stranded unit at the end of the gude tube (FR), so that the stranding elements can move towards the outside only to a trifling extent.

8. A process as claimed in one of the preceding Claims, characterised in that twisting of the finished sheath (MA), including the bundle, is prevented in the region of the cooling path by two friction rollers (AR1, AR2).

9. Apparatus for carrying out the process as claimed in one of the preceding Claims, characterised in that it comprises a stranding device (VS), a guide tube (FR) for the light waveguide bundle which is connected after said stranding device, a device for extruding an outer sheath (MA) and a device for drawing off the sheath with cooling and reduction of the diameter thereof to such an extent that the sheath can take over the role of the guide tube; and that as an extrusion device, there is provided an extrusion head (SK) which has a passage for the light waveguide bundle and which at the outlet end has an outlet opening for the material of the sheath concentrically around the passage, and to the passage of which, the guide tube (FR) is coaxially connected between axis and outlet opening.

10. Apparatus as claimed in Claim 9, characterised in that a tubular store (RO) which is reversible in the direction of rotation serves as a stranding device, and said tubular store is provided with a stranding disc (VS) at the end, which is externally supported by a bearing (LA).

11. Apparatus as claimed in one of Claims 9 or 10, characterised in that there is provided a funnel-shaped container (KH) which serves to receive the filling compound (FM) and which at the outlet end has an extension piece (KH3) serving as a stranding nipple.

12. Apparatus as claimed in Claim 11, characterised in that the guide tube (FR) is secured to the extension piece (KH3).

13. Apparatus as claimed in one of Claims 11 or 12, characterised in that the extension piece (KH3) is mounted in the passage of the extrusion head (SK).

FIG2

RO

VE2

VE1

LA   VS

KH   KH1

KH2

KH3   FM

AS

SK   EF

FIG 1

VE   FA
     HU
     KE

FM

MA

FR
MA

BE
KF

AR1   AR2